**Europäisches Patentamt**

**European Patent Office**

**Office européen des brevets**

(19)

(11) **EP 1 666 191 A1**

(12) **EUROPEAN PATENT APPLICATION**

(43) Date of publication:
**07.06.2006 Bulletin 2006/23**

(51) Int Cl.:
*B23K 35/36* (2006.01)    *B23K 35/02* (2006.01)

(21) Application number: **05001840.7**

(22) Date of filing: **28.01.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventors:<br>• **Kim, Yong Chul**<br>  **Changwon-si, Gyeongnam 641-120 (KR)**<br>• **Bang, Hwan Cheol**<br>  **Changwon-si, Gyeongnam 641-120 (KR)** |
| (30) Priority: **03.12.2004 KR 2004101307** | (74) Representative: **Beck, Michael Rudolf et al**<br>**Beck & Rössig**<br>**European Patent Attorneys**<br>**Cuvilliésstrasse 14**<br>**81679 München (DE)** |
| (71) Applicant: **Kiswel Ltd.**<br>**Sasang-gu,**<br>**Busan 617-843 (KR)** | |

(54) **Copper-free wires for gas-shielded arc welding**

(57)    A copper-free wire for gas-shielded arc welding, designed to have excellent arc stability upon semi-automatic welding or automatic welding so as to secure good feedability and lowering amounts of spatter. The wire has a flat-shaped worked surface, and depressions formed into the surface (toward the center of the wire) to the said worked surface reference while being provided on the surface of the wire in a circumferential direction. The ratio of a total length of the worked surface to the wire reference circular arc length is 50 ~ 95 %. The wire is coated with a surface treatment agent of 0.03 ~ 0.70 g per 1 kg of the wire. The surface treatment agent consists of at least one of animal oil, vegetable oil, mineral oil, mixed oil, and synthesized oil. The wire enables the wire to come into stable contact with the contact tip, so that the copper flakes are not accumulated within the conduit cable and the contact tip upon welding for a long time, thereby providing excellent arc stability, which results in stable feedability and reduced spattering.

**Fig. 5**

**Description**

BACKGROUND OF THE INVENTION

Field of the Invention

The present invention relates to copper-free wires for gas-shielded arc welding, and, more particularly, to copper-free wires for gas-shielded arc welding, which have excellent arc stability upon semi-automatic welding or automatic welding, thereby ensuring good feedability and lowering amounts of spatter.

Description of the Related Art

Recently, with the development of automated welding, application of wires for gas-shielded arc welding has rapidly increased, and as a result, the wires for gas-shielded arc welding have been widely employed particularly in the automobile industry, shipbuilding industry, construction industry, and the like. As such, the wires for welding are used in a great amount in various fields as mentioned above, and are generally plated on their surface with copper in order to ensure properties of the wire, such as conductivity, feedability, rust resistance, and the like. In the case where copper is plated on the surface of the wire, it is necessary to form a uniformly plated layer on the surface of the wire in order to ensure conductivity, feedability and rust resistance. In the case where copper is non-uniformly plated on the surface of the wire, minute copper flakes are detached from the surface of the wire due to friction between the wire and the contact tip within a contact tip upon welding, and concentrated on a portion within the contact tip, thereby causing a clogging phenomenon of the contact tip. Such a clogging phenomenon of the contact tip leads to feeding instability and arc instability, while increasing the quantity of spattering. In addition to the above-mentioned problem, the copper-plated wire creates harmful wastewater during a plating process, thereby aggravating environmental pollution.

In order to solve such problems, including environmental pollution, wires which do not have copper plated on the surface thereof, that is, copper-free wires, have been developed. For the copper-plated wire, a thin film of the copper plated layer enables the wire to have stable contact to the contact tip, thereby providing a relatively stable arc property, but for the copper-free wire, it is necessary to provide a specific property to the surface layer of the wire, which replaces the copper-plated layer, in order to ensure a stable contact with the contact tip.

Examples of conventional technologies imparting the specific property on the surface layer of the wire are disclosed in Japanese Patent Laid-open No. 2003-191092, Japanese Patent Laid-open No. 2003-225793, Japanese Patent Laid-open No. 2003-170293, and Japanese Patent Laid-open No. 2004-001061.

According to these conventional technologies, the wire is formed on the surface thereof with bottleneck-shaped depressions, which consist of a bore and an inner portion expanded inside the bore, and/or cave-shaped depressions extended into the surface layer of the wire, that is, cave-shaped pits comprising a portion which is not illuminated by incident light from the outside. The pit serves to stably anchor a powder-shaped functional coating agent, which must be present on the surface of the wire in order to ensure arc stability and feedability. Additionally, polyisobutene oil is simultaneously used as a supplementary means for stably anchoring the powder-shaped functional coating agent.

The inventors of the present invention have investigated the conventional technologies as described above, and as a result, have discovered that, since it is essentially impossible to uniformly control the size (volume) of the bottleneck-shaped or cave-shaped pits, that is, an inside volume of the depression, as disclosed in the conventional technologies, it is impossible to uniformly coat the functional coating agent on the surface of the wire in the circumferential direction, only with the bottleneck-shaped or cave-shaped pit and the ratio of the portion length which is not illuminated by the virtual incident light from the outside to the wire reference circular arc length. Accordingly, in the conventional technologies, upon welding for a long time, the powder-shaped functional coating agent is accumulated within a conduit cable and the contact tip, which causes feeding instability, and interrupts the stable contact between the contact tip and the wire, which causes arc instability, resulting in an increase of spatter generation. The powder-shaped functional coating agent can be fused or attached or by-products thereof can be accumulated particularly on the front end of the contact tip by resistive heating and radiative heating upon welding.

SUMMARY OF THE INVENTION

The present invention has been made to solve the above problems, and it is an object of the present invention to provide a copper-free wire for gas-shielded arc welding, engineered to have a specific property on the surface of the wire so as to enable the wire to come into stable contact with a contact tip without a copper-plated layer on the surface of the wire, so that the copper flakes is not accumulated within a conduit cable and the contact tip upon welding for a long time, thereby providing excellent arc stability, which result in stable feedability and reduced spattering.

In accordance with an aspect of the present invention, the above and other objects can be accomplished by the provision of a copper-free wire for gas-shielded welding, wherein the wire has a flat-shaped worked surface, and depressions formed into the surface (toward the center of the wire) to the said worked surface reference while being provided on the surface of the wire in a circumferential direction.

The ratio of the total length of the worked surface to the wire reference circular arc length is within the range of 50 ~ 95 %.

The surface of the wire may be coated with 0.03 ~ 0.70 g of surface treatment agent per 1 kg of wire, and the surface treatment agent may consist of at least one of animal oil, vegetable oil, mineral oil, mixed oil, and synthesized oil.

BRIEF DESCRIPTION OF THE DRAWINGS

The foregoing and other objects and features of the present invention will be more clearly understood from the following detailed description taken in conjunction with the accompanying drawings, in which:

Figs. 1 and 2 are scanning electron microscope (SEM) micrographs, showing the surface of a wire that worked surface is not existent;
Figs. 3 and 4 are SEM micrographs, showing the surface of a wire that worked surface is entirely existent;
Figs. 5 and 6 are SEM micrographs, showing the surface of a wire in accordance with the present invention, which has a worked surface and depressions formed into the surface in a negative direction to the said worked surface reference; and
Fig. 7 is an SEM micrograph, which is reorganized by analyzing the image of the wire surface shown in Fig. 5 through an image analyzing system in order to obtain a total length of the worked surface.

DESCRIPTION OF THE PREFERRED EMBODIMENTS

Preferred embodiments will now be described in detail with reference to the accompanying drawings.

As described above, unlike a copper-plated wire of the conventional technologies, even though it is necessary for a copper-free wire to have a specific property on the surface thereof in order to enable the wire to come into stable contact with a contact tip, a method for imparting the specific property thereon has been limited to control surface roughness, a specific surface area, and the like within a prescribed range on the surface of the wire until now, and with such a method, stable contact between the contact tip and the wire cannot be achieved.

During continuous investigations into an approach for imparting the specific property on the surface of the wire, which can replace the copper-plated layer on the surface of the wire, the inventors have found that the surface of the wire can be classified into three types of wire surface, that is, a flat surface only consisting of a worked surface (in the specification, the term "worked surface" means a flat portion formed on the surface of the wire in the circumferential direction by dies upon drawing, when viewing an image of a cross section of the wire, which is magnified 1,000 times by a SEM), an irregular surface (凹凸) that worked surface is not existent, and a combined surface consisting of worked surfaces and depressions formed into the surface (toward the center of the wire) to the said worked surface reference while being provided on the surface of the wire in a circumferential direction, and that, in the case of combined surface of the wire, the arc stability and the weldability of the wire is excellent, resulting in the present invention.

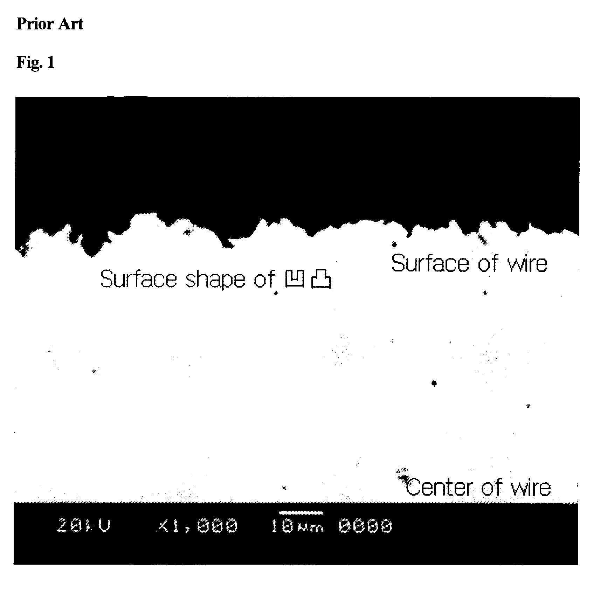

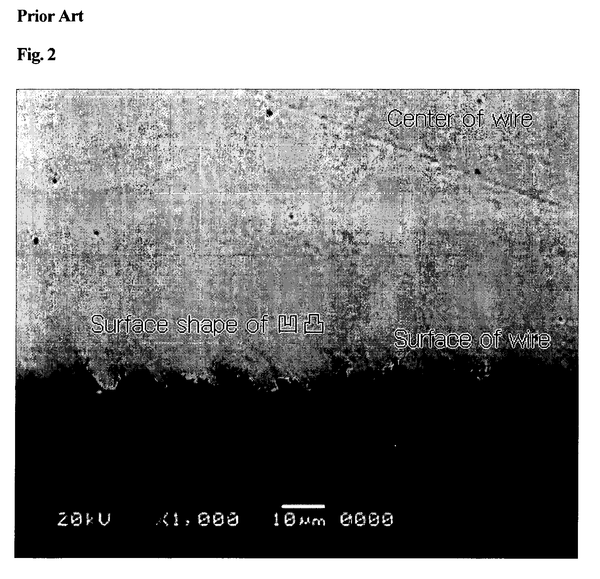

Herein, the term "irregular surface" means a surface that worked surface is not existent, as shown in Figs. 1 and 2. In the meantime, according to the conventional technologies as disclosed in Japanese Patent Laid-open No. 2003-191092, Japanese Patent Laid-open No. 2003-225793, Japanese Patent Laid-open No. 2003-170293, and Japanese Patent Laid-open No. 2004-001061, the wire is formed on the surface thereof with bottleneck-shaped and/or cave-shaped pits, each of which consists of a bore and an inner portion expanded inside the bore, which corresponds to the irregular surface according to the classification of the present invention.

Although such an irregular surface can provide excellent retainability of a surface treatment agent or a functional coating agent, stable contact between the contact tip and the wire is not ensured due to lack of the worked surface, as well as deteriorating the feedability for an increase in feeding load due to friction within a feeding cable upon welding.

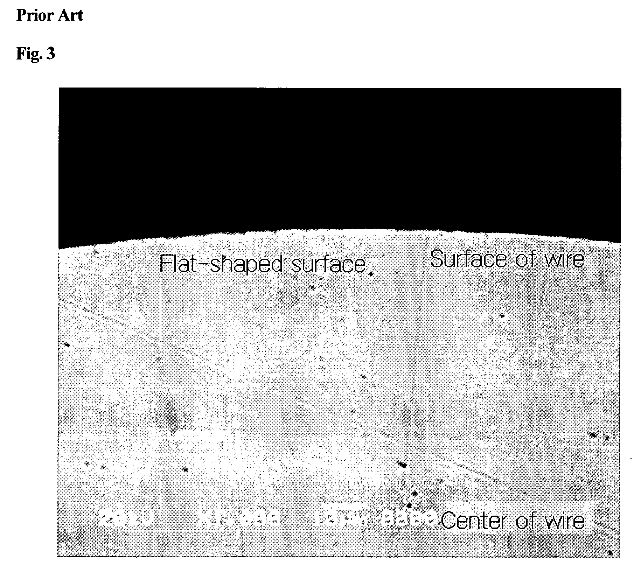

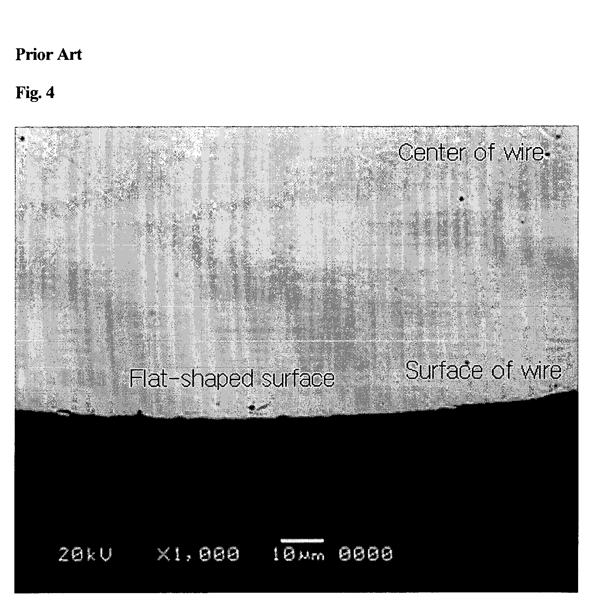

In the meantime, the flat surface as shown in Figs. 3 and 4 consists of the worked surface, which ensures stable contact between the contact tip and the wire while deteriorating the retainability of a surface treatment agent or the functional coating agent, resulting in deterioration of the feedability due to insufficient lubrication.

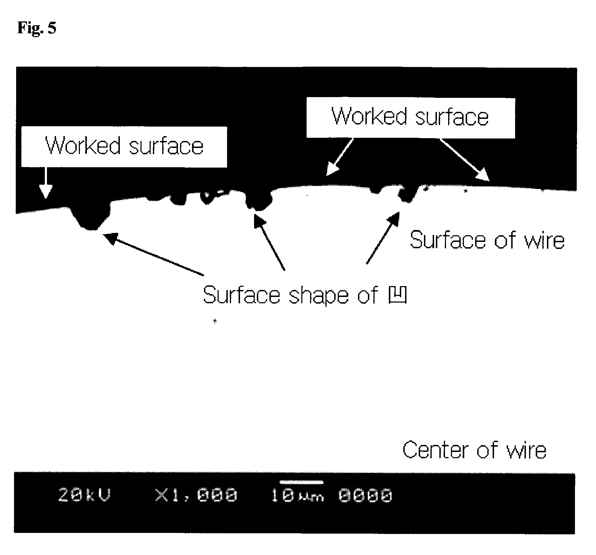

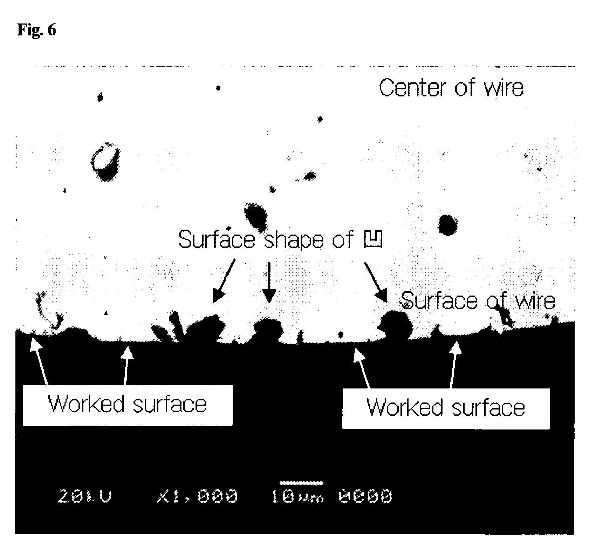

On the contrary, as shown in Figs. 5 and 6, the combined surface of the wire in accordance with the present invention has the worked surface, which is flat in the circumferential direction, and the depressions formed into the surface (toward the center of the wire) to the said worked surface reference when viewing the cross section of the wire, instead of the irregular (凹凸) surface.

The wire surface in accordance with the present invention ensures stable contact between the contact tip and the wire during welding and provides arc stability, thereby reducing the spattering.

At this time, preferably, the ratio of the total length of the worked surface to the wire reference circular arc length is in the range of 50 ~ 95 % under the condition that the wire has the combined surface.

In the case of the ratio below 50 %, although the retainability of a surface treatment agent is excellent, the surface of the wire becomes rough, so that stable contact between the contact tip and the wire cannot be ensured, and the feedability is deteriorated by the increase in feeding load due to the friction within the feeding cable upon welding. However, in the case of the ratio in the range of 50 ~ 95 %, the surface of the wire becomes flat while ensuring a sufficient worked surface, thereby providing arc stability and reducing spattering. Moreover, the surface of the wire is coated with the aforementioned 0.03 ~ 0.70 g of surface treatment agent per 1 kg of the wire. The surface treatment agent serves to impart stable feedability to the wire, thereby further enhancing arc stability.

If less than 0.03 g of the surface treatment agent is present per 1 kg of wire sufficient lubrication cannot be ensured due to the excessively low quantity of the surface treatment agent, thereby deteriorating the feedability, on the contrary, if more than 0.70 g of the surface treatment agent is present per 1 kg of wire, feedability is deteriorated due to a slip phenomenon within the feeder section during welding.

In accordance with the present invention, the surface treatment agent consists of at least one of animal oil, vegetable oil, mineral oil, mixed oil, and synthesized oil. When using a powder type surface treatment agent, after long periods of welding, the powdery surface treatment agent is accumulated within a conduit cable and the contact tip. However, when using the surface treatment agent of oil type, the accumulation of the surface treatment agent can be avoided, thereby further stabilizing the arc while more effectively reducing spattering.

Hereinafter a method will be described of forming the wire having the worked surface, which is flat in the circumferential direction, and the depressions formed into the surface (toward the center of the wire) to the said worked surface reference, instead of the irregular surface (⊔⌂ or ⌂), when viewing the surface of the cross section of the wire, such that the ratio of the total length of the worked surface to the wire reference circular arc length is in the range of 50 ~ 95 %.

First, in order to secure the ratio of the total length of the worked surface to the wire reference circular arc length in accordance with the present invention, the surface roughness before the drawing process, that is, the surface roughness of an original rod, which will be subjected to the drawing process, must be adjusted below 0.40 $\mu$m (Ra standard). This can be obtained through an acid pickling process using hydrochloric acid, sulfuric acid, and the like, or a polishing process after a mechanical descaling process.

Next, an appropriate combination of a drawing method and a drawing rate must be secured. As for the drawing method, an in-line drawing may be used by means of all dry drawing (which will be referred to as "DD"), all cassette roller-die drawing (which will be referred to as "CRD"), or the combination of the CRD + DD. Alternatively, a two-stage drawing may be performed using DD (primary drawing)-skin pass (which will be referred to as "SP") (secondary drawing), DD (primary drawing)-wet drawing (which will be referred to as "WD") (secondary drawing), CRD (primary drawing)-SP (secondary drawing) or CRD (primary drawing)-WD (secondary drawing).

In the case of the in-line drawing, the drawing rate must be controlled to be 1,000 m/sec or less, and in the case of the two-stage drawing, the drawing rate must be controlled such that as the primary drawing rate increases, the secondary drawing rate decreases.

Lastly, the final wire after finishing drawing must be processed to have a surface roughness within 0.25 ~ 0.10 $\mu$m (Ra standard) by appropriately adjusting the roughness of the original rod, the drawing method, and the drawing rate.

An example of the present invention will be described in the following.

Table 1 shows the surface roughness of the final wire after finishing drawing obtained according to various surface roughnesses, drawing methods, and drawing rates. At this time, when drawing the rod, hole-dies are used except for the CRD. From Table 1, it can be seen that, in order to provide the final wire after finishing drawing with a surface roughness within 0.25 ~ 0.10 $\mu$m (Ra standard), the surface roughness of the original rod must be managed to be within 0.40 $\mu$m or less (Ra standard) under the condition that, in the case of the in-line drawing, the drawing rate must be controlled to be 1,000 m/min or less irrespective of the DD, the CRD or the combination thereof, and in the case of two-stage drawing, the drawing rate must be controlled such that as the primary drawing rate increases the secondary drawing rate decreases. For example, when the primary drawing rate is in the range of 1,000 ~ 1,500 m/min, the secondary drawing rate is 400 m/min or less, and when the primary drawing rate is in the range of 500 ~ 1,000 m/min, the secondary drawing rate is 600 m/min or less. Exceptionally, as can be seen in the case of comparative examples Nos. 15 and 16, using a primary drawing rate of 500 m/min or less and a secondary drawing rate of 200 m/min or less, which is an excessively low rate, resulted in a surface roughness after drawing of 0.10 $\mu$m or less (Ra standard), and thus an appropriate combination of the drawing rates is required.

Table 1

| Sample No. | SRB (μm) | Drawing Method | Drawing Rate (m/min) | | SRA (μm) |
|---|---|---|---|---|---|
| | | | PD | SD | |
| CE 1 | 0.61 | DD, CRD, CRD+DD | > 1500 | - | 0.35 |
| CE 2 | 0.54 | | > 1500 | - | 0.46 |
| CE 3 | 0.47 | | > 1500 | - | 0.45 |
| CE 4 | 0.35 | | 1000~1500 | - | 0.31 |
| CE 5 | 0.36 | | 1000~1500 | - | 0.42 |
| CE 6 | 0.31 | | 1000~1500 | - | 0.27 |
| IE 1 | 0.32 | | 500~1000 | - | 0.21 |
| IE 2 | 0.35 | | 500~1000 | - | 0.25 |
| IE 3 | 0.33 | | 500~1000 | - | 0.22 |
| IE 4 | 0.40 | | < 500 | - | 0.24 |
| CE 7 | 0.39 | | < 500 | - | 0.19 |
| IE 5 | 0.37 | | < 500 | - | 0.20 |
| IE 6 | 0.29 | | < 500 | - | 0.15 |
| CE 8 | 0.38 | DD(P)+SP(S), DD(P)+WD(S), CRD(P)+SP(S), CRD(P)+WD(S) | > 1500 | > 600 | 0.35 |
| CE 9 | 0.35 | | > 1500 | 400~600 | 0.37 |
| CE 10 | 0.33 | | > 1500 | 200~400 | 0.24 |
| IE 7 | 0.38 | | > 1500 | < 200 | 0.24 |
| CE 11 | 0.42 | | 1000~1500 | > 600 | 0.36 |
| CE 12 | 0.41 | | 1000~1500 | 400~600 | 0.33 |
| IE 8 | 0.35 | | 1000~1500 | 200~400 | 0.22 |
| IE 9 | 0.38 | | 1000~1500 | < 200 | 0.15 |
| CE 13 | 0.46 | | 500~1000 | > 600 | 0.31 |
| IE 10 | 0.39 | | 500~1000 | 400~600 | 0.21 |
| IE 11 | 0.33 | | 500~1000 | 200~400 | 0.24 |
| IE 12 | 0.34 | | 500~1000 | < 200 | 0.19 |
| CE 14 | 0.37 | | < 500 | > 600 | 0.27 |
| IE 13 | 0.37 | | < 500 | 400~600 | 0.25 |
| IE 14 | 0.32 | | < 500 | 200~400 | 0.18 |
| IE 15 | 0.30 | | < 500 | 200~400 | 0.24 |
| IE 16 | 0.29 | | < 500 | 200~400 | 0.14 |
| CE 15 | 0.29 | | < 500 | < 200 | 0.09 |
| CE 16 | 0.22 | | 400 | < 200 | 0.08 |

Note: CE = comparative example, IE = Inventive example, SRB = Surface roughness before drawing, SRA = Surface roughness after drawing, P = Primary, S = Secondary, PD = Primary drawing, SD = Secondary drawing

Table 2 shows the results of measurement on the surface shape of the cross section of the wire, a ratio (%) of the total length of a worked surface of the wire to the wire reference circular arc length at the limited measurement area, an amount of a surface treatment agent, feedability of respective wires, and arc stability, each of which are measured for the wire obtained in Table 1.

Table 2

| Sample No. | Surface shape | Ratio (%) | STA (g/W.Kg) | Feedability | Arc stability |
|---|---|---|---|---|---|
| CE 1 | 凹凸 | - | 0.33 | X | X |
| CE 2 | 凹凸 | - | 0.12 | X | X |
| CE 3 | 凹凸 | - | 0.03 | X | X |
| CE 4 | 凹 | 41 | 0.42 | △ | X |
| CE 5 | 凹凸 | - | 0.02 | X | X |
| CE 6 | 凹 | 45 | 0.35 | △ | X |
| IE 1 | 凹 | 52 | 0.56 | O | O |
| IE 2 | 凹 | 50 | 0.70 | O | O |
| IE 3 | 凹 | 59 | 0.45 | O | O |
| IE 4 | 凹 | 61 | 0.22 | O | O |
| CE 7 | 凹 | 51 | 0.75 | △ | O |
| IE 5 | 凹 | 65 | 0.15 | O | O |
| IE 6 | 凹 | 68 | 0.09 | O | O |
| CE 8 | 凹凸 | - | 0.21 | X | X |
| CE 9 | 凹凸 | - | 0.35 | X | X |
| CE 10 | 凹 | 48 | 0.41 | O | X |
| IE 7 | 凹 | 74 | 0.31 | O | O |
| CE 11 | 凹凸 | - | 0.33 | X | X |
| CE 12 | 凹凸 | - | 0.34 | X | X |
| IE 8 | 凹 | 77 | 0.47 | O | O |
| IE 9 | 凹 | 80 | 0.03 | O | O |
| CE 13 | 凹凸 | - | 0.45 | X | X |
| IE 10 | 凹 | 75 | 0.64 | O | O |
| IE 11 | 凹 | 83 | 0.55 | O | O |
| IE 12 | 凹 | 85 | 0.42 | O | O |
| CE 14 | 凹凸 | - | 0.54 | X | X |
| IE 13 | 凹 | 89 | 0.38 | O | O |
| IE 14 | 凹 | 90 | 0.05 | O | O |
| IE 15 | 凹 | 94 | 0.07 | O | O |
| IE 16 | 凹 | 95 | 0.04 | O | O |
| CE 15 | FS | 96 | 0.20 | △ | O |
| CE 16 | FS | 99 | 0.07 | X | O |

Note: CE = comparative example, IE = Inventive example, FS = Flat surface, STA = Surface treatment agent

The shape of the wire surface was determined from an image of a cross section of the wire vertically taken to the length of the wire, which is magnified 1,000 times in the SEM micrograph, in which mark "凹凸" indicates an irregular surface that worked surface is not existent, mark "凹" indicates a combined surface of the present invention, which consists of a worked surface and depressions formed into the surface (toward the center of the wire) to the said worked surface reference while being provided on the surface of the wire in a circumferential direction, and "FS" indicates a flat surface only consisting of a worked surface. As can be seen in Table 2, the combined surface of the present invention is obtained for the wires having the surface roughness within 0.25 ~ 0.10 $\mu$m (Ra standard) among the wires of Table 1.

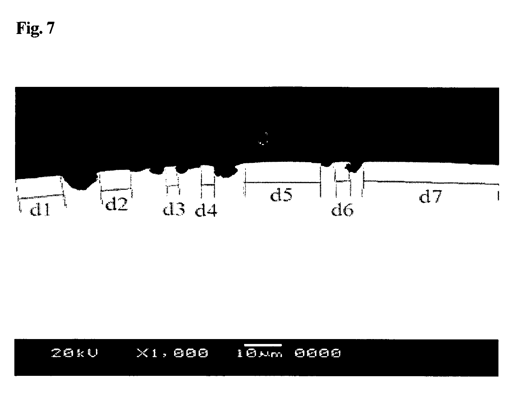

The ratio (%) of the total length of the worked surface to the wire reference circular arc length at the limited measurement area was obtained as follows using the image of the cross section of the wire vertically taken to the length of the wire, which is magnified 1,000 times by the SEM. That is, Fig. 7 is a photograph reorganized by analyzing the image of the wire surface shown in Fig. 5 through an image analyzing system (Image-pro plus 4.5, Media cybernetics), by which a value of d1 + d2 + ···+ dn, that is, the total length of the worked surface, and a value of d, that is, the wire reference circular arc length at the limited measurement area can be obtained (the value of d was obtained by the circular arc of an imaginary circle provided by the image analyzing system).

Actual measurement using the image analyzing system was preformed as described below.

First, final wire samples were extracted, and removed of contaminants on the surface thereof through ultrasonic cleaning in an organic solvent. The wire samples were heated to 400 °C for 2 ~ 3 hours, thereby forming an oxidized thin film on the surface of the wire samples. Subsequently, each of the wire samples having the oxidized thin film thereon was subjected to a mounting process using a thermosetting resin in the longitudinal direction of the wire such that the cross section of the wire sample can be seen above the top surface of the thermosetting resin surrounding the wire sample, followed by polishing the wire samples together with the thermosetting resin so as to expose the cross section of the wire on the top surface of the thermosetting resin surrounding the wire sample. Finally, the polished cross section of each wire was observed using back scattering electrons of the SEM, and the total length of the worked surface was measured using the image analyzing system. At this time, the magnification was 1,000 times.

In the present invention, measurement of the applied amount of the surface treatment agent was performed according to the following method.

1. Preparing a wire sample having a length of 6 ~ 8 cm and a weight of about 50 ~ 80 g.
2. Preparing a solvent, $CCl_4$ of 1,000 m$\ell$, in a beaker.
3. Measuring the weight (Wb) of the wire sample before degreasing on 1g/10,000g scales
4. Inputting the wire sample into the beaker containing $CCl_4$, and degreasing of surface treatment oil from the wire sample for 10 minutes while stirring the wire samples two or three times.
5. Drying the degreased wire sample for 10 minutes within a dry oven, and cooling the wire sample to room temperature in a desiccator.
6. Measuring the weight (Wa) of the wire sample after degreasing on 1g/10,000 scales.
7. Calculating the applied amount of the surface treatment agent based on measured values of Wb and Wa according to the following Equation:

```
Applied amount of surface treatment agent (g/W.kg) =

{(Wb-Wa)/ Wa} x 1000
```

A method of evaluating the arc stability and the feedability will be described as follows.

Table 3 shows the welding conditions for evaluating the arc stability, in which a straight feeding cable having a length of 3 m was used for evaluating the arc stability.

Table 3

| Welding conditions for evaluating arc stability | | Welding position |
|---|---|---|
| Current(A): 210 | Voltage(V): 23 | Bean on plate |
| Velocity(cm/min): 100 | Welding time(sec): 15 | |
| Gas $CO_2$ 100% | Gas flow rate(l/min): 20 | |

According to the arc stability evaluation results, when the weight of a spatter having a length of 1 mm or more exceeds 0.2 g or the weight of the total spatter exceeds 2 g, the arc stability was given a poor evaluation, which is indicated "x" in the table, and when the weight of the spatter is below the value as mentioned above, the arc stability was given an excellent evaluation, which is indicated "O" in the table. Wires used for evaluating the arc stability were JIS Z 3312 YGW 12 (AWS A5.18 ER70S-6) 1.2 mm.

Table 4 shows the welding conditions for evaluating the feedability, in which a new feeding cable having a length of 5 m and wound two times (ring shape) to have a diameter of 300 mm was used for evaluating the feedability.

Table 4

| Welding conditions for evaluating feedability | | Welding position |
|---|---|---|
| Current(A): 420 | Voltage(V): 44 | Bean on plate, Zigzag weaving |
| Velocity(cm/min): 50 | Welding time(sec): - | |
| Gas $CO_2$ 100% | Gas flow rate(l/min): 20 | |

According to the result of evaluation for the feedability, when a continuous welding time was 80 sec or less, feeding was not smoothly performed, thereby resulting in failure of welding, and the feedability was thus given a poor evaluation, which is indicated "x" in the table. When the continuous welding time was 100 sec or more, the feedability was thus given an excellent evaluation, which is indicated "O" in the table, and when the continuous welding time is in the range of 80 ~ 100 sec, the feedability was thus given a normal evaluation, which is indicated "△" in the table. Wires used for evaluating the feedability were also JIS Z 3312 YGW 12 (AWS A5.18 ER70S-6) 1.2 mm.

Although the wires used for the example of the present invention were JIS Z 3312 YGW12 (AWS A5.18 ER70S-6) 1.2 mm, JIS YGW 11, 14, 15, 16, 18 and 21 wires also provided the same results.

From Table 2, it can be seen that comparative examples 1, 2, 3, 8, 9, 11, 12, 13 and 14 (including a high speed drawing condition of the secondary drawing) have surface shapes of 凹 凸 on the cross section of the wire due to high speed drawing, thereby resulting in poor feedability and arc stability even with the amount of the surface treatment agent within the range of the present invention. Comparative examples 4, 6, and 10 have surface shapes of 凹 on the cross section of the wire according to stable drawing conditions while having the amount of the surface treatment agent within the range of the present invention, thereby ensuring marginally good feedability. As can be seen from Table 2, however, in the comparative examples 4, 6, and 10, the ratios of the total length of the worked surface to the wire reference circular arc length at the limited measurement area were 41 %, 45 %, and 48 %, respectively. That is, since the worked surfaces are not sufficiently provided to the respective wires, contact between a contact tip and the wire is unstable upon welding, thereby causing arc instability. Particularly, as shown in Table 2, it can be seen that, in comparative examples 4, 6, and 10, even though the surface roughnesses of the wire before or after drawing are secured within the range of the present invention, since the drawing rates are not appropriately controlled, the ratios of the total length of the worked surface to the wire reference circular arc length at the limited measurement area exceed the range of the present invention.

Comparative example 5 not only has a surface shape of 凹 凸 on the cross section of the wire due to a high speed drawing, but also the amount of the surface treatment agent deviating from the range of the present invention, thereby resulting in poor feedability and arc stability. Comparative example 7 has a surface shape of 凹 on the cross section of the wire according to a stable drawing condition while having a ratio of 51 % in the total length of the worked surface to the wire reference circular arc length at the limited measurement area, thereby providing good arc stability. However, the amount of the surface treatment agent exceeds the range of the present invention, causing slip to occur in feeder sections upon welding, and thus the feedability is not secured. Both comparative examples 15 and 16 have a flat surface on the cross section of the wire while exceeding a ratio of 95 % in the total length of the worked surface to the wire reference circular arc length at the limited measurement area, thereby providing stable contact between the contact tip and the wire, and ensuring the arc stability. However, even though the amount of the surface treatment agent is within the range of the present invention, due to the flat surfaces on the cross section of the wires, slip occurs in the feeder sections upon welding, and thus the feedability is not secured.

In the meantime, by optimally adjusting the surface roughness before drawing, the drawing method, the drawing rate, and the surface roughness after drawing within the range of the present invention, inventive examples 1 ~ 16 have surface shapes of the cross section of the wire, which consist of the worked surface, and depressions 凹 formed into the surface (toward the center of the wire) to the said worked surface reference while being provided on the wire surface in a circumferential direction, so that the ratios of the total length of the worked surface to the wire reference circular arc length at the limited measurement area are in the range of 50 ~ 95 %. Additionally, in the inventive examples 1 ~ 16, the amount of the surface treatment agent is adjusted to be within 0.03 ~ 0.70 g/w.kg, thereby satisfying the feedability and the arc stability.

As apparent from the description, according to the present invention, the copper-free wire for gas-shielded arc welding enables the wire to come into stable contact with the contact tip without the copper-plated layer on the surface of the wire, so that the copper flakes are not accumulated within the conduit cable and the contact tip upon welding for a long time, thereby providing excellent arc stability, which result in stabilizing feedability and lowering spattering.

It should be understood that the embodiments and the accompanying drawings have been described for illustrative purposes and the present invention is limited by the following claims. Further, those skilled in the art will appreciate that various modifications, additions and substitutions are allowed without departing from the scope and spirit of the invention as set forth in the accompanying claims.

**Claims**

1. A copper-free wire for gas-shielded arc welding, wherein the wire has a flat-shaped worked surface, and depressions formed into the surface (toward the center of the wire) to the said worked surface reference while being provided on the surface of the wire in a circumferential direction.

**2.** The copper-free wire as set forth in claim 1, wherein a ratio of a total length of the worked surface to the wire reference circular arc length at the limited measurement area is in the range of 50 ~ 95 %.

**3.** The copper-free wire as set forth in claim 1 or 2, wherein the wire is coated on the surface thereof with a surface treatment agent of 0.03 ~ 0.70 g per 1 kg of the wire.

**4.** The copper-free wire as set forth in claim 3, wherein the surface treatment agent consists of at least one of animal oil, vegetable oil, mineral oil, mixed oil, and synthesized oil.

**Prior Art**

**Fig. 1**

Surface shape of 凹凸

Surface of wire

Center of wire

20kV    X1,000    10μm    0000

**Prior Art**

**Fig. 2**

**Prior Art**

**Fig. 3**

**Prior Art**

**Fig. 4**

**Fig. 5**

**Fig. 6**

**Fig. 7**

**European Patent Office**

**EUROPEAN SEARCH REPORT**

Application Number

EP 05 00 1840

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATENT ABSTRACTS OF JAPAN vol. 2003, no. 11, 5 November 2003 (2003-11-05) & JP 2003 211286 A (KOBE STEEL LTD), 29 July 2003 (2003-07-29) * abstract * | 1-4 | B23K35/36 B23K35/02 |
| A | PATENT ABSTRACTS OF JAPAN vol. 2003, no. 12, 5 December 2003 (2003-12-05) & JP 2004 314099 A (NIPPON STEEL & SUMIKIN WELDING CO LTD), 11 November 2004 (2004-11-11) * abstract * | 1-4 | |
| A | PATENT ABSTRACTS OF JAPAN vol. 1995, no. 01, 28 February 1995 (1995-02-28) & JP 06 285678 A (NIPPON STEEL WELD PROD & ENG CO LTD), 11 October 1994 (1994-10-11) * abstract * | 1-4 | |
| A | PATENT ABSTRACTS OF JAPAN vol. 005, no. 037 (M-058), 10 March 1981 (1981-03-10) & JP 55 161574 A (KOBE STEEL LTD), 16 December 1980 (1980-12-16) * abstract * | 1-4 | TECHNICAL FIELDS SEARCHED (IPC) B23K |
| A | PATENT ABSTRACTS OF JAPAN vol. 2003, no. 12, 5 December 2003 (2003-12-05) & JP 2003 320475 A (NIPPON STEEL & SUMIKIN WELDING CO LTD), 11 November 2003 (2003-11-11) * abstract * | 1-4 | |

The present search report has been drawn up for all claims

| Place of search | Date of completion of the search | Examiner |
|---|---|---|
| The Hague | 8 March 2006 | Chebeleu, A |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

......................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 05 00 1840

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2006

| Patent document cited in search report | | Publication date | Patent family member(s) | | Publication date |
|---|---|---|---|---|---|
| JP 2003211286 | A | 29-07-2003 | NONE | | |
| JP 2004314099 | A | 11-11-2004 | NONE | | |
| JP 06285678 | A | 11-10-1994 | JP | 3153040 B2 | 03-04-2001 |
| JP 55161574 | A | 16-12-1980 | NONE | | |
| JP 2003320475 | A | 11-11-2003 | NONE | | |

EPO FORM P0459

For more details about this annex : see Official Journal of the European Patent Office, No. 12/82